# EUROPEAN PATENT APPLICATION

(11) **EP 2 993 829 A1**
(43) Date of publication of application: **09.03.2016**
(21) Application number: 13885338.7
(22) Date of filing: 24.05.2013
(51) Int. Cl.: H04L 12/28

(54) **SERVICE ACCESS CONTROL METHOD AND APPARATUS**

(71) Applicant: Huawei Technologies Co., Ltd., Longgang District Shenzhen, Guangdong 518129 (CN)
(72) Inventor: ZHANG, Wanqiang, Shenzhen Guangdong 518129 (CN)
(74) Representative: Gill Jennings & Every LLP
(86) International application number: PCT/CN2013/076194
(87) International publication number: WO 2014/186974

(57) **Abstract**

The present invention provides a service access control method and apparatus, where the method includes: first acquiring TFT information; when service data access control starts, determining whether service data is within an allowed access range of the TFT information or determining whether indication information carried in the TFT information indicates that access of service data corresponding to the TFT information is allowed; and if a result of the determining is yes, allowing the access of the service data; or if a result of the determining is not, denying the access of the service data. A particular service can be restricted, or a particular service can be allowed to access a network. Therefore, a defect in the prior art that allowed access control or restricted access control cannot be performed on a particular service is resolved.

## Description

### TECHNICAL FIELD

Embodiments of the present invention relate to the field of network communications technologies, and in particular, to a service access control method and apparatus.

### BACKGROUND

Over recent years, application of a mobile Internet has developed rapidly. A user can use user equipment (UE, User Equipment) such as a mobile phone to conveniently download and install various applications from a network for use. Generally, however, some application programs can be used only after being connected to the network. If too many application programs are simultaneously connected to the network, network congestion occurs. In addition, some application programs disclose personal information of a user without permission of the user, which cannot protect rights and interests of the user. Therefore, a mechanism is required to enable the network to deny access of some application programs. When a natural disaster occurs, application of a packet domain becomes significantly important, for example, providing a disaster information bulletin board service, a disaster voice message service, or the like, which allows people to confirm safety of their relatives. In this case, an operator needs to ensure preferential access connections for the foregoing important services when the network is congested.

Therefore, a method that can not only deny access of unnecessary applications to the network, but also allow access of particular services to the network is required. In an existing 3rd Generation Partnership Project (3GPP, Third Generation Partnership Project) technology, a mechanism for access control, such as access class barring (ACB, Access Class Barring), domain specific access control (DSAC, Domain Specific Access Control), service specific access control (SSAC, Service Specific Access Control), and extended access barring (EAB, Extended Access Barring) is provided. When congestion occurs on a network side, the ACB and the EAB restrict mobile origination (MO, mobile origination) of all applications on a terminal, a DSAC mechanism controls the terminal to originate only services in a CS or PS domain, and the SSAC controls the terminal to originate only a voice/video service. Therefore, in a process of practicing and studying the prior art, the inventor finds that in an existing access control mechanism proposed with respect to the 3GPP technology, only unified restriction can be performed on all services interacting with a terminal device, or only several types of services can be restricted; in other words, none of the access control mechanisms in the prior art can implement allowed access control or restricted access control on a particular service.

### SUMMARY

In view of the foregoing defect in the prior art, the present invention provides a service access control method and apparatus, which may restrict a particular service or allow a particular service to access a network, resolving a defect in the prior art that only all services on a terminal can be restricted to access the network.

A service access control method, including:
acquiring traffic flow template (TFT, Traffic Flow Template) information;
when service data access control starts, determining whether service data is within an allowed access range of the TFT information; and
if a result of the determining is yes, allowing access of the service data; or if a result of the determining is not, denying access of the service data.

A service access control method, including:
acquiring TFT information, where the TFT information carries indication information;
when service data access control starts, determining whether the indication information carried in the TFT information indicates that access of service data corresponding to the TFT information is allowed; and
if a result of the determining is yes, allowing the access of the service data; or if a result of the determining is not, denying the access of the service data.

A service access control apparatus, including:
an acquiring unit, configured to acquire TFT information;
a determining unit, configured to: when service data access control starts, determine whether service data is within an allowed access range of the TFT information acquired by the acquiring unit; and
an executing unit, configured to: when a result of the determining by the determining unit is yes, allow access of the service data; or when a result of the determining by the determining unit is not, deny access of the service data.

A service access control apparatus, including:
an acquiring unit, configured to acquire TFT information, where the TFT information carries indication information;
a determining unit, configured to: when service data access control starts, determine whether the indication information carried in the TFT information acquired by the acquiring unit indicates that access of service data corresponding to the TFT information is allowed; and
an executing unit, configured to: when a result of the determining by the determining unit is yes, allow the access of the service data; or when a result of the determining by the determining unit is not, deny the access of the service data.

It can be learned from the foregoing technical solutions that the embodiments of the present invention have the following advantages:
The present invention provides a service access control method and apparatus, where the method includes: acquiring TFT information; when service data access control starts, determining whether service data is within an allowed access range of the TFT information or determining whether indication information carried in the TFT information indicates that access of service data corresponding to the TFT information is allowed; and if a result of the determining is yes, allowing the access of the service data; or if a result of the determining is not, denying the access of the service data. A particular service can be restricted, or a particular service can be allowed to access a network. Therefore, a defect in the prior art that allowed access control or restricted access control cannot be performed on a particular service is resolved.

### BRIEF DESCRIPTION OF DRAWINGS

FIG. 1 is a flowchart of a method according to Embodiment 1 of the present invention;
FIG. 2 is a signaling diagram of an application scenario of a service access control method according to Embodiment 2;
FIG. 3 is a flowchart of a method according to Embodiment 3 of the present invention;
FIG. 4 is a signaling diagram of an application scenario of a service access control method according to Embodiment 4;
FIG. 5 is a signaling diagram of an application scenario of a service access control method according to Embodiment 4;
FIG. 6 is a signaling diagram of an application scenario of a service access control method according to Embodiment 6;
FIG. 7 is a signaling diagram of an application scenario of a service access control method according to Embodiment 7;
FIG. 8 is a signaling diagram of an application scenario of a service access control method according to Embodiment 8;
FIG. 9 is a signaling diagram of an application scenario of a service access control method according to Embodiment 9;
FIG. 10 is a signaling diagram of an application scenario of a service access control method according to Embodiment 10;
FIG. 11a is a schematic diagram of an apparatus according to Embodiment 11 of the present invention;
FIG. 11b is a schematic diagram of another apparatus according to Embodiment 11 of the present invention;
FIG. 11c is a schematic diagram of another apparatus according to Embodiment 11 of the present invention;
FIG. 11d is a schematic diagram of another apparatus according to Embodiment 11 of the present invention;
FIG. 12a is a schematic diagram of an apparatus according to Embodiment 12 of the present invention;
FIG. 12b is a schematic diagram of another apparatus according to Embodiment 12 of the present invention;
FIG. 12c is a schematic diagram of another apparatus according to Embodiment 12 of the present invention;
FIG. 12d is a schematic diagram of another apparatus according to Embodiment 12 of the present invention;
FIG. 13 is a schematic diagram of an apparatus according to Embodiment 13 of the present invention; and
FIG. 14 is a schematic diagram of an apparatus according to Embodiment 14 of the present invention.

### DESCRIPTION OF EMBODIMENTS

Embodiments of the present invention provide a service access control method and apparatus, used to restrict a particular service or allow a particular service to access a network, resolving a defect in the prior art that only all services on a terminal can be restricted to access the network.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person skilled in the art based on the embodiments of the present invention shall fall within the protection scope of the present invention.

### Embodiment 1

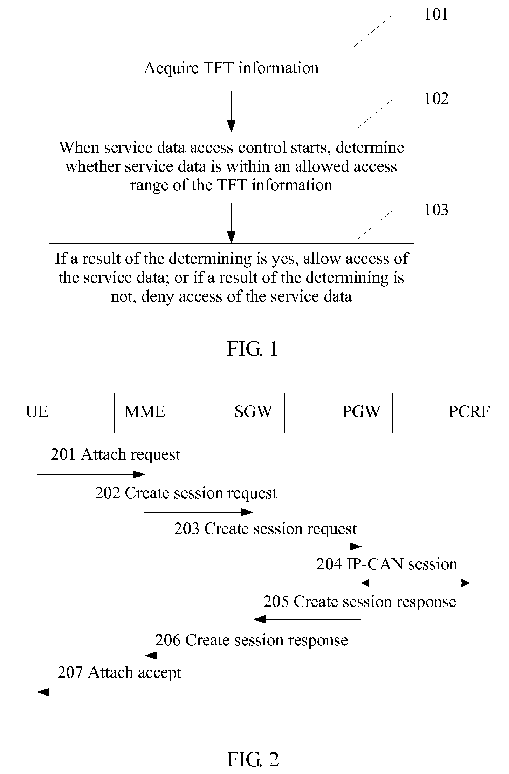

Referring to FIG. 1, FIG. 1 is a flowchart of a method according to Embodiment 1 of the present invention. As shown in FIG. 1, Embodiment 1 of the present invention provides a service access control method, which may include the following steps:
101. Acquire TFT information.
102. When service data access control starts, determine whether service data is within an allowed access range of the TFT information.
103. If a result of the determining is yes, allow access of the service data; or if a result of the determining is not, deny access of the service data.

The TFT information includes allowed access information and/or denied access information, where the allowed access information includes flow template information corresponding to the allowed access information, and the denied access information includes flow template information corresponding to the denied access information.

The flow template information is any combination of: a source IP address, a destination IP address, a source port number, a destination port number, an upper layer protocol number, and an application identifier.

Step 102 in Embodiment 1 of the present invention may specifically include:
determining whether information of the service data is consistent with the flow template information corresponding to the allowed access information; and if the information of the service data is consistent with the flow template information corresponding to the allowed access information, determining that the service data is within the allowed access range of the TFT information; or if the information of the service data is not consistent with the flow template information corresponding to the allowed access information, determining that the service data is beyond the allowed access range of the TFT information;
and/or
determining whether information of the service data is consistent with the flow template information corresponding to the denied access information; and if the information of the service data is consistent with the flow template information corresponding to the denied access information, determining that the service data is beyond the allowed access range of the TFT information; or if the information of the service data is not consistent with the flow template information corresponding to the denied access information, determining that the service data is within the allowed access range of the TFT information.

Further, before the acquiring TFT information, the method may include: sending an attach request message to a network side device. The acquiring TFT information may include: receiving an attach accept message sent by the network side device, where the attach accept message carries the TFT information.

In this step of the method in this embodiment, the attach request message may be sent by a user terminal to the network side device. When the network side device feeds back the attach accept message to the user terminal, the user terminal may acquire the TFT information from the attach accept message.

Further, the acquiring TFT information may include: receiving TFT information delivered by a policy and charging rules function PCRF.

In this step of the method in this embodiment, the TFT information delivered by the PCRF may be received by a PGW.

Further, the acquiring TFT information may include: acquiring locally configured TFT information.

In this step of the method in this embodiment, the locally configured TFT information may be acquired by the PGW.

According to a service access control method provided in Embodiment 1 of the present invention, TFT information is acquired; when service data access control starts, and when UE sends service data to a network or an external network sends service data to the UE, it is determined whether the service data to be sent is within an allowed access range of the TFT information. If the service data is within the allowed access range of the TFT information, access of the service data is allowed; or if the service data is beyond the allowed access range of the TFT information, access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

The following describes the service access control method provided in Embodiment 1 of the present invention by using a specific scenario as an example.

### Embodiment 2

Referring to FIG. 2, FIG. 2 is a signaling diagram of an application scenario of a service access control method according to Embodiment 2.

As shown in FIG. 2, an interaction process of the method in Embodiment 2 is as follows:
201. UE sends an attach request message to a mobility management entity (MME, Mobility Management Entity).
202. The MME sends a create session request message to a serving gateway (SGW, Serving GateWay).
203. The SGW forwards the create session request message to a packet data network gateway (PGW, PDN GateWay).

According to the method in this embodiment, the UE initiates an attach request to the MME, and the MME selects the PGW and the SGW and then initiates default bearer setup to the PGW.

204. The PGW and a policy and charging rules function (PCRF, Policy and Charging Rules Function) establish an IP connectivity access network (IP-CAN, IP-Connectivity Access Network) session, and the PCRF provides TFT information to the PGW

In an embodiment, the TFT information may also be acquired in the following manner: acquiring locally configured TFT information. This embodiment of the present invention sets no limit thereto.

In this embodiment, the TFT information may include: allowed access information and/or denied access information. The allowed access information and the denied access information each include corresponding flow template information, where the flow template information is any combination of: a source Internet Protocol (IP, Internet Protocol) address, a destination IP address, a source port number, a destination port number, an upper layer protocol number, and an application identifier.

It should be noted that the PGW receives the TFT information; therefore, when an external network sends service data to the UE, if service data access control starts and the PGW receives the service data from the external network, it is determined whether the service data is within an allowed access range of the TFT information; and if a result of the determining is yes, access of the service data is allowed; or if a result of the determining is not, access of the service data is denied. A specific step of the determining may be: determining whether information of the service data is consistent with the flow template information of the allowed access information; and if the information of the service data is consistent with the flow template information of the allowed access information, determining that the service data is within the allowed access range of the TFT information; or if the information of the service data is not consistent with the flow template information of the allowed access information, determining that the service data is beyond the allowed access range of the TFT information; and/or, determining whether the information of the service data is consistent with the flow template information of the denied access information; and if the information of the service data is consistent with the flow template information of the denied access information, determining that the service data is beyond the allowed access range of the TFT information; or if the information of the service data is not consistent with the flow template information of the denied access information, determining that the service data is within the allowed access range of the TFT information.

205. The PGW sends a create session response message to the SGW.

The create session response message carries the TFT information that is provided by the PCRF to the PGW or that is locally configured by the PGW.

206. The SGW forwards the create session response message to the MME.

The create session response message carries the TFT information.

207. The MME sends an attach accept message to the UE.

In step 204, the PGW acquires the TFT information from the IP-CAN session established between the PGW and the PCRF, or the PGW locally configures the TFT information, and sends, by using the SGW and the MME, the create session response message carrying the TFT to the UE. That is, the create session response message sent in step 205 and step 206 and the attach accept message sent in step 207 both carry the TFT information.

The attach request message sent by the MME to the UE carries the TFT information. In this embodiment, the TFT information may include: allowed access information and/or denied access information. The allowed access information and the denied access information each include corresponding flow template information, where the flow template information is any combination of: a source IP address, a destination IP address, a source port number, a destination port number, an upper layer protocol number, and an application identifier.

When the UE needs to send service data, it is determined whether the service data is within an allowed access range of the TFT information; and if a result of the determining is yes, access of the service data is allowed; or if a result of the determining is not, access of the service data is denied. A specific step of the determining may be: determining whether information of the service data is consistent with the flow template information of the allowed access information; and if the information of the service data is consistent with the flow template information of the allowed access information, determining that the service data is within the allowed access range of the TFT information; or if the information of the service data is not consistent with the flow template information of the allowed access information, determining that the service data is beyond the allowed access range of the TFT information; and/or, determining whether the information of the service data is consistent with the flow template information of the denied access information; and if the information of the service data is consistent with the flow template information of the denied access information, determining that the service data is beyond the allowed access range of the TFT information; or if the information of the service data is not consistent with the flow template information of the denied access information, determining that the service data is within the allowed access range of the TFT information.

According to a service access control method provided in Embodiment 2 of the present invention, TFT information is acquired; when service data access control starts, and when UE sends service data to a network or an external network sends service data to the UE, it is determined whether the service data to be sent is within an allowed access range of the TFT information. If the service data is within the allowed access range of the TFT information, access of the service data is allowed; or if the service data is beyond the allowed access range of the TFT information, access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 3

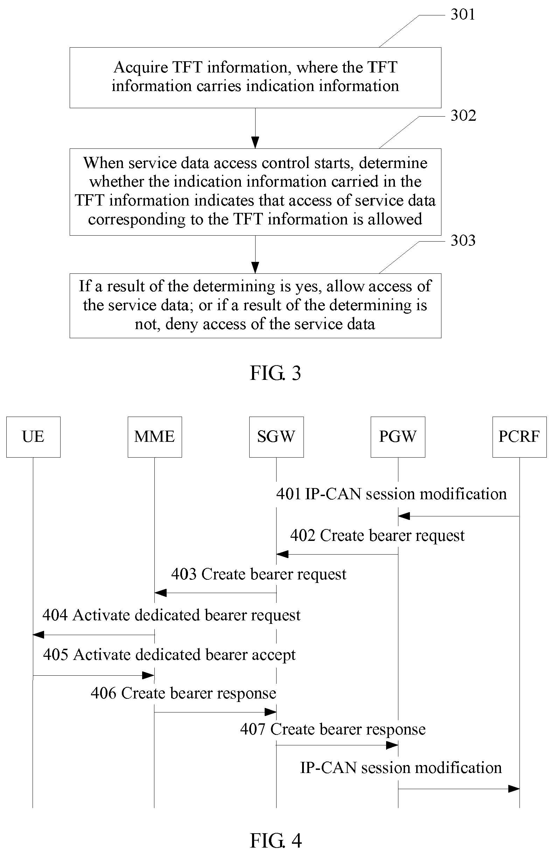

Referring to FIG. 3, FIG. 3 is a flowchart of a method according to Embodiment 3 of the present invention.

As shown in FIG. 3, a service access control method may include the following steps:
301. Acquire TFT information, where the TFT information carries indication information.
302. When service data access control starts, determine whether the indication information carried in the TFT information indicates that access of service data corresponding to the TFT information is allowed.
303. If a result of the determining is yes, allow the access of the service data; or if a result of the determining is not, deny the access of the service data.

Further, the acquiring TFT information includes: receiving a first request message sent by a network side device, where the first request message carries the TFT information.

The first request message includes: an activate dedicated bearer request message, a message for requesting secondary Packet Data Protocol (PDP, Packet Data Protocol) context activation, a modify evolved packet system (EPS, Evolved Packet System) bearer request message, a modify PDP context request message, an activate secondary PDP context accept message, and the message for requesting secondary PDP context activation that are sent by the network side device.

In this step of the method in this embodiment, the first request message sent by the network side device may be received by a user terminal, and the TFT information may be acquired from the first request message.

Further, the acquiring TFT information includes: receiving a second request message, where the second request message carrying the TFT information includes an IP-CAN session modification procedure message delivered by a policy and charging rules function PCRF.

In this step of the method in this embodiment, the TFT information delivered by the PCRF may be received by a network device such as a PGW or a GGSN.

Further, the acquiring TFT information includes: acquiring locally configured TFT information.

In this step of the method in this embodiment, the locally configured TFT information may be acquired by a network device such as a PGW or a GGSN.

According to a service access control method provided in Embodiment 3 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

Embodiments 4 to 8 of the present invention are examples for specific scenarios of a service access control method provided in the present invention.

### Embodiment 4

Referring to FIG. 4, FIG. 4 is a signaling diagram of an application scenario of a service access control method according to Embodiment 4.

As shown in FIG. 4, an interaction process of a method in Embodiment 4 is as follows:
401. A PCRF delivers an IP-CAN session modification procedure message to a PGW, where the IP-CAN session modification procedure message carries TFT information, and the TFT information carries indication information. The indication information is used to indicate whether access of service data corresponding to the TFT information is allowed.

It should be noted that step 401 may also be: TFT information is locally configured in a PGW, where the TFT information carries indication information. The indication information is used to indicate whether access of service data corresponding to the TFT information is allowed.

After the PGW receives the IP-CAN session modification procedure message delivered by the PCRF, it is determined whether the indication information carried in the TFT information indicates that access of service data corresponding to the TFT information is allowed.

If a result of the determining is yes, access of service data that is corresponding to the TFT information and that is sent by using the PGW is allowed; or if a result of the determining is not, access of service data that is corresponding to the TFT information and that is sent by using the PGW is denied.

402. The PGW sends a create bearer request message to an SGW

The create bearer request message includes the TFT information.

403. The SGW forwards, to an MME, the create bearer request message sent by the PGW

The forwarded create bearer request message also carries the TFT information.

Step 402 and step 403 may be summarized as follows: The PGW creates a dedicated bearer to the MME, and each bearer correspondingly carries one piece of TFT information, where the TFT information carries the indication information.

404. The MME sends an activate dedicated bearer request message to UE.

The activate dedicated bearer request message sent in step 404 carries the TFT information.

After the UE receives the activate dedicated bearer request message sent by the MME, the UE acquires the TFT information from the activate dedicated bearer request message. When service data access control starts, and the UE sends service data to a network, it is determined whether the indication information carried in the TFT information indicates that access of service data corresponding to the TFT information is allowed.

If a result of the determining is yes, the access of the service data that is corresponding to the TFT information and that is sent by using the UE is allowed; or if a result of the determining is not, the access of the service data that is corresponding to the TFT information and that is sent by using the UE is denied.

405. The UE feeds back an activate dedicated bearer accept message to the MME.

406. The MME sends a create bearer response message to the SGW.

407. The SGW sends the create bearer response message to the PGW

Step 405 to step 407 may be summarized as follows: The UE feeds back the activate dedicated bearer accept message to the MME, and the MME sends the create a bearer response message to the PGW.

According to a service access control method provided in Embodiment 4 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 5

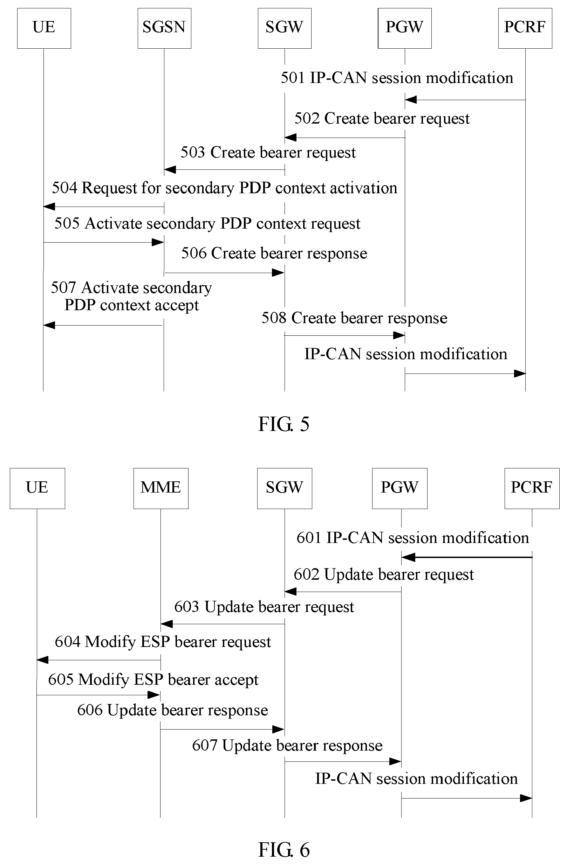

Embodiment 5 of the present invention may be applicable to a 2G/3G network. Referring to FIG. 5, FIG. 5 is a signaling diagram of an application scenario of a service access control method according to Embodiment 5.

As shown in FIG. 5, an interaction process of the method in Embodiment 5 is as follows:
501. A PCRF delivers an IP-CAN session modification procedure message to a PGW, where the IP-CAN session modification procedure message carries TFT information, and the TFT information carries indication information. The indication information is used to indicate whether access of service data corresponding to the TFT information is allowed.

It should be noted that step 501 may also be: TFT information is locally configured in a PGW, where the TFT information carries indication information. The indication information is used to indicate whether access of service data corresponding to the TFT information is allowed.

After the PGW receives the IP-CAN session modification procedure message delivered by the PCRF, it is determined whether the indication information carried in the TFT information indicates that access of service data corresponding to the TFT information is allowed.

If a result of the determining is yes, the access of the service data that is corresponding to the TFT information and that is sent by using the PGW is allowed; or if a result of the determining is not, the access of the service data that is corresponding to the TFT information and that is sent by using the PGW is denied.

502. The PGW sends a create bearer request message to an SGW

The create bearer request message includes the TFT information.

503. The SGW forwards, to a serving packet radio service technology support node (SGSN, Serving GPRS Support Node), the create bearer request message sent by the PGW.

The forwarded create bearer request message also carries the TFT information.

Step 502 and step 503 may be summarized as follows: The PGW creates a dedicated bearer to the SGSN, and each bearer correspondingly carries one piece of TFT information, where the TFT information carries the indication information.

504. The SGSN sends a message for requesting secondary PDP context activation to UE.

The message for requesting secondary PDP context activation sent in step 504 carries the TFT information.

After the UE receives the message for requesting secondary PDP context activation sent by the SGSN, the UE acquires the TFT information from the message for requesting secondary PDP context activation. When service data access control starts, and the UE sends service data to a network, it is determined whether the indication information carried in the TFT information indicates that access of service data corresponding to the TFT information is allowed. If a result of the determining is yes, the access of the service data that is corresponding to the TFT information and that is sent by using the UE is allowed; or if a result of the determining is not, the access of the service data that is corresponding to the TFT information and that is sent by using the UE is denied.

505. The UE feeds back an activate secondary PDP context request message to the SGSN.

506. The SGSN sends a create bearer response message to the SGW

507. The SGSN sends an activate secondary PDP context accept message to the UE.

508. The SGW sends the create bearer response message to the PGW

According to a service access control method provided in Embodiment 5 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 6

Referring to FIG. 6, FIG. 6 is a signaling diagram of an application scenario of a service access control method according to Embodiment 6.

As shown in FIG. 6, an interaction process of the method in Embodiment 6 is as follows:

601. A PCRF delivers an IP-CAN session modification procedure message to a PGW, where the IP-CAN session modification procedure message carries TFT information, and the TFT information carries indication information. The indication information is used to indicate whether access of service data corresponding to the TFT information is allowed.

It should be noted that step 601 may also be: TFT information is locally configured in a PGW, where the TFT information carries indication information. The indication information is used to indicate whether access of service data corresponding to the TFT information is allowed.

After the PGW receives the IP-CAN session modification procedure message delivered by the PCRF, it is determined whether the indication information carried in the TFT information indicates that access of service data corresponding to the TFT information is allowed. If a result of the determining is yes, the access of the service data that is corresponding to the TFT information and that is sent by using the PGW is allowed; or if a result of the determining is not, the access of the service data that is corresponding to the TFT information and that is sent by using the PGW is denied.

602. The PGW sends an update bearer request message to an SGW

The update bearer request message includes the TFT information.

603. The SGW forwards, to an MME, the update bearer request message sent by the PGW

The forwarded update bearer request message also carries the TFT information.

Step 602 and step 603 may be summarized as follows: The PGW updates a bearer to the MME, and each bearer correspondingly carries one piece of TFT information, where the TFT information carries the indication information.

604. The MME sends a request message for EPS bearer modification to UE.

The request message for EPS bearer modification sent in step 604 carries the TFT information.

After the UE receives the request message for EPS bearer modification sent by the MME, the UE acquires the TFT information from the request message for EPS bearer modification. When service data access control starts, and the UE sends service data to a network, it is determined whether the indication information carried in the TFT information indicates that access of service data corresponding to the TFT information is allowed. If a result of the determining is yes, the access of the service data that is corresponding to the TFT information and that is sent by using the UE is allowed; or if a result of the determining is not, the access of the service data that is corresponding to the TFT information and that is sent by using the UE is denied.

605. The UE feeds back an accept message for EPS bearer modification to the MME.

606. The MME sends an update bearer response message to the SGW.

607. The SGW sends the update bearer response message to the PGW

Step 605 to step 607 may be summarized as follows: The UE feeds back the accept message for EPS bearer modification to the MME, and the MME updates a bearer response to the PGW

According to a service access control method provided in Embodiment 6 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 7

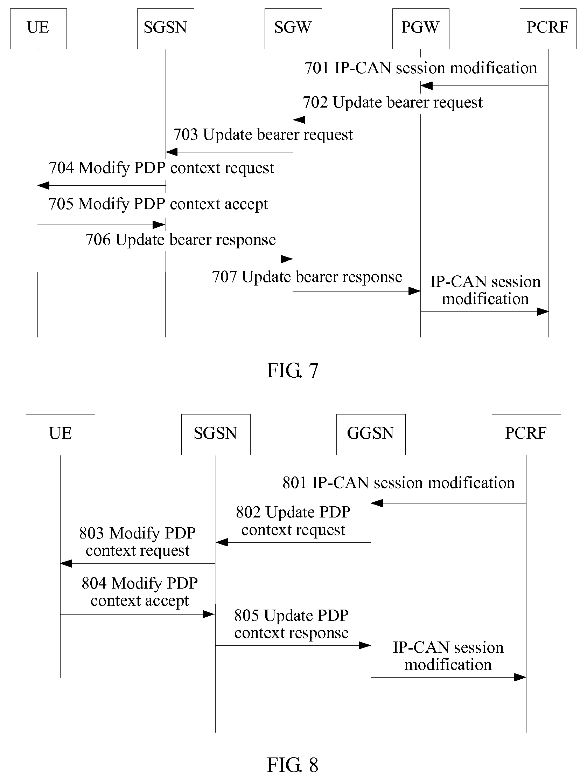

An interaction process of a method in Embodiment 7 of the present invention is an application scenario in which a service access control method is applied to a 2G/3G network. Referring to FIG. 7, FIG. 7 is a signaling diagram of an application scenario of a service access control method according to Embodiment 7.

As shown in FIG. 7, the interaction process of the method in Embodiment 7 is as follows:
701. A PCRF delivers an IP-CAN session modification procedure message to a PGW, where the IP-CAN session modification procedure message carries TFT information, and the TFT information carries indication information. The indication information is used to indicate whether access of service data corresponding to the TFT information is allowed.

It should be noted that step 701 may also be: TFT information is locally configured in a PGW, where the TFT information carries indication information. The indication information is used to indicate whether access of service data corresponding to the TFT information is allowed.

After the PGW receives the IP-CAN session modification procedure message delivered by the PCRF, it is determined whether the indication information carried in the TFT information indicates that access of service data corresponding to the TFT information is allowed.

If a result of the determining is yes, the access of the service data that is corresponding to the TFT information and that is sent by using the PGW is allowed; or if a result of the determining is not, the access of the service data that is corresponding to the TFT information and that is sent by using the PGW is denied.

702. The PGW sends an update bearer request message to an SGW

The update bearer request message includes the TFT information.

703. The SGW forwards, to an SGSN, the update bearer request message sent by the PGW.

The forwarded update bearer request message also carries the TFT information.

Step 702 and step 703 may be summarized as follows: The PGW updates a bearer to the SGSN, and each bearer correspondingly carries one piece of TFT information, where the TFT information carries the indication information.

704. The SGSN sends a modify PDP context request message to UE.

The modify PDP context request message sent in step 704 carries the TFT information.

After the UE receives the modify PDP context request message sent by the SGSN, the UE acquires the TFT information from the modify PDP context request message. When service data access control starts, and the UE sends service data to a network, it is determined whether the indication information carried in the TFT information indicates that access of service data corresponding to the TFT information is allowed.

If a result of the determining is yes, the access of the service data that is corresponding to the TFT information and that is sent by using the UE is allowed; or if a result of the determining is not, the access of the service data that is corresponding to the TFT information and that is sent by using the UE is denied.

705. The UE feeds back an accept message for PDP context modification to the SGSN.

706. The SGSN sends an update bearer response message to the SGW

707. The SGW sends the update bearer response message to the PGW

Step 705 to step 707 may be summarized as follows: The UE feeds back the accept message for PDP context modification to the SGSN, and the SGSN sends the update creat bearer response message to the PGW

According to a service access control method provided in Embodiment 7 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 8

Embodiment 8 of the present invention is an application scenario in which a service access control method is applied, for example, to a conventional network where an SGSN is connected to a gateway packet radio service technology support node (GGSN, Gateway GPRS Support Node). Referring to FIG. 8, FIG. 8 is a signaling diagram of an application scenario of a service access control method according to Embodiment 8.

As shown in FIG. 8, an interaction process of the method in Embodiment 8 is as follows:
801. A PCRF delivers an IP-CAN session modification procedure message to a GGSN, where the IP-CAN session modification procedure message carries TFT information, and the TFT information carries indication information. The indication information is used to indicate whether access of service data corresponding to the TFT information is allowed.

It should be noted that step 801 may also be: A GGSN locally configures TFT information, where the TFT information carries indication information. The indication information is used to indicate whether access of service data corresponding to the TFT information is allowed.

After the GGSN receives the IP-CAN session modification procedure message delivered by the PCRF, it is determined whether the indication information carried in the TFT information indicates that access of service data corresponding to the TFT information is allowed. If a result of the determining is yes, the access of the service data that is corresponding to the TFT information and that is sent by using the GGSN is allowed; or if a result of the determining is not, the access of the service data that is corresponding to the TFT information and that is sent by using the GGSN is denied.

802. The SGSN sends an update PDP context request message to an SGSN.

The update PDP context request message includes the TFT information.

803. The SGSN sends a modify PDP context request message to UE.

The modify PDP context request message sent in step 803 carries the TFT information, and the TFT information carries the indication information.

After the UE receives the modify PDP context request message sent by the SGSN, the UE acquires the TFT information from the modify PDP context request message. When service data access control starts, and the UE sends service data to a network, it is determined whether the indication information carried in the TFT information indicates that access of service data corresponding to the TFT information is allowed.

If a result of the determining is yes, the access of the service data that is corresponding to the TFT information and that is sent by using the UE is allowed; or if a result of the determining is not, the access of the service data that is corresponding to the TFT information and that is sent by using the UE is denied.

804. The UE feeds back a modify PDP context accept message to the SGSN.

805. The SGSN sends an update PDP context response message to the GGSN.

According to a service access control method provided in Embodiment 8 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 9

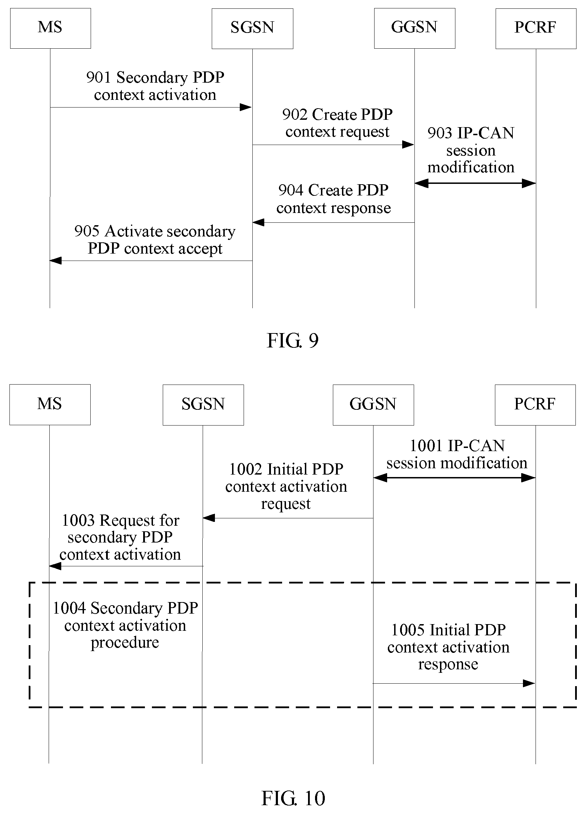

Referring to FIG. 9, FIG. 9 is a signaling diagram of an application scenario of a service access control method according to Embodiment 9. As shown in FIG. 9, in a scenario in which an SGSN is connected to a GGSN, an interaction process between a terminal and network side devices is as follows:
901. A mobile station (MS, mobile station) sends a secondary PDP context activation request message to the SGSN.
902. The SGSN sends a create PDP context request message to the GGSN.
903. The GGSN interacts with a PCRF, and the PCRF delivers an IP-CAN session modification procedure message to the GGSN, where the IP-CAN session modification procedure message carries TFT information, and the TFT information carries indication information. The indication information is used to indicate whether access of service data corresponding to the TFT information is allowed.

It should be noted that step 903 may also be: The GGSN locally configures TFT information, where the TFT information carries indication information. The indication information is used to indicate whether access of service data corresponding to the TFT information is allowed.

After the GGSN receives the IP-CAN session modification procedure message delivered by the PCRF, it is determined whether the indication information carried in the TFT information indicates that access of service data corresponding to the TFT information is allowed. If a result of the determining is yes, access of service data that is corresponding to the TFT information and that is sent by using the GGSN is allowed; or if a result of the determining is not, access of service data that is corresponding to the TFT information and that is sent by using the GGSN is denied.

904. The GGSN feeds back a create PDP context response message to the SGSN.

The create PDP context response message carries the TFT information.

905. The SGSN feeds back an activate secondary PDP context accept message to UE.

The activate secondary PDP context accept message sent in step 905 carries the TFT information, and the TFT information carries the indication information.

After the UE receives the activate secondary PDP context accept message sent by the SGSN, the UE acquires the TFT information from the activate secondary PDP context accept message. When service data access control starts, and the UE sends service data to a network, it is determined whether the indication information carried in the TFT information indicates that access of service data corresponding to the TFT information is allowed.

If a result of the determining is yes, access of the service data that is corresponding to the TFT information and that is sent by using the UE is allowed; or if a result of the determining is not, access of the service data that is corresponding to the TFT information and that is sent by using the UE is denied.

According to a service access control method provided in Embodiment 9 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, access of the service data is allowed; or if a result of the determining is not, access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 10

Referring to FIG. 10, FIG. 10 is a signaling diagram of an application scenario of a service access control method according to Embodiment 10. As shown in FIG. 10, in a scenario in which an SGSN is connected to a GGSN, an interaction process between a terminal and network side devices is as follows:
1001. A PCRF delivers an IP-CAN session modification procedure message to a GGSN, where the IP-CAN session modification procedure message carries TFT information, and the TFT information carries indication information. The indication information is used to indicate whether access of service data corresponding to the TFT information is allowed.

It should be noted that step 1001 may also be: A GGSN locally configures TFT information, where the TFT information carries indication information. The indication information is used to indicate whether access of service data corresponding to the TFT information is allowed.

After the GGSN receives the IP-CAN session modification procedure message delivered by the PCRF, it is determined whether the indication information carried in the TFT information indicates that access of service data corresponding to the TFT information is allowed. If a result of the determining is yes, the access of the service data that is corresponding to the TFT information and that is sent by using the GGSN is allowed; or if a result of the determining is not, the access of the service data that is corresponding to the TFT information and that is sent by using the GGSN is denied.

1002. The GGSN sends an initial PDP context activation request message to the SGSN.

The initial PDP context activation request message carries the TFT information.

1003. The SGSN sends a message for requesting secondary PDP context activation to UE.

The message for requesting secondary PDP context activation sent in step 1003 carries the TFT information, and the TFT information carries the indication information.

After the UE receives the message for requesting secondary PDP context activation sent by the SGSN, the UE acquires the TFT information from the message for requesting secondary PDP context activation. When service data access control starts, and the UE sends service data to a network, it is determined whether the indication information carried in the TFT information indicates that access of service data corresponding to the TFT information is allowed.

If a result of the determining is yes, the access of the service data that is corresponding to the TFT information and that is sent by using the UE is allowed; or if a result of the determining is not, the access of the service data that is corresponding to the TFT information and that is sent by using the UE is denied.

1004. The UE initiates a secondary PDP context activation procedure to the GGSN.

1005. The SGSN sends an initial PDP context activation response message to the GGSN.

According to a service access control method provided in Embodiment 10 of the present invention, TFT information is acquired, where the TFT information carries indication information; when service data access control starts, and when UE sends service data to a network or an external network sends service data to the UE, it is determined whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the method in this embodiment, allowed access control or denied access control can be pertinently performed on service data transmitted in a network, which effectively resolves network congestion in the network and does not affect access of normal service data.

### Embodiment 11

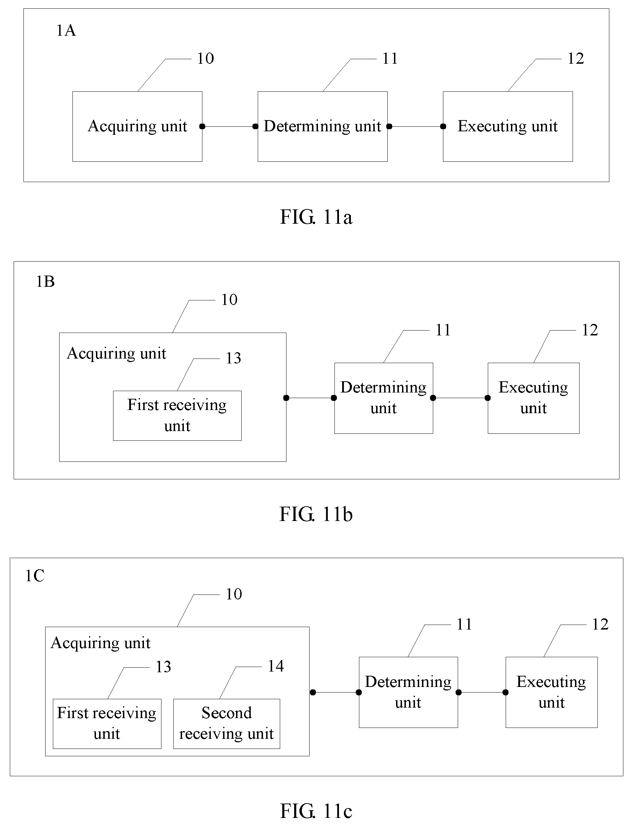

Referring to FIG. 11a, FIG. 11a is a schematic diagram of an apparatus according to Embodiment 11 of the present invention. As shown in FIG. 11a, a service access control apparatus 1A may include:
an acquiring unit 10, configured to acquire TFT information;
a determining unit 11, configured to: when service data access control starts, determine whether service data is within an allowed access range of the TFT information acquired by the acquiring unit 10; and
an executing unit 12, configured to: when a result of the determining by the determining unit 11 is yes, allow access of the service data; or when a result of the determining by the determining unit 11 is not, deny access of the service data.

Referring to FIG. 11b in addition to FIG. 11b, FIG. 11b is a schematic diagram of another apparatus according to Embodiment 11 of the present invention. This apparatus is optimized based on the apparatus shown in FIG. 11a. As shown in FIG. 11b, in an embodiment, a service access control apparatus 1B may further include:
the acquiring unit 10 may include a first receiving unit 13, configured to receive an attach accept message sent by a network side device, where the attach accept message carries the TFT information.

The service access control apparatus 1B in this embodiment may be a terminal device such as the UE in method embodiments 1 and 2.

Referring to FIG. 11c in addition to FIG. 11a, FIG. 11c is a schematic diagram of another apparatus according to Embodiment 11 of the present invention. This apparatus is optimized based on the apparatus shown in FIG. 11a. As shown in FIG. 11c, in an embodiment, a service access control apparatus 1C is provided, where the acquiring unit 10 may further include: a second receiving unit 14, configured to receive TFT information delivered by a PCRF.

The service access control apparatus 1C in this embodiment may be a network device such as the PGW or the GGSN in the method embodiments.

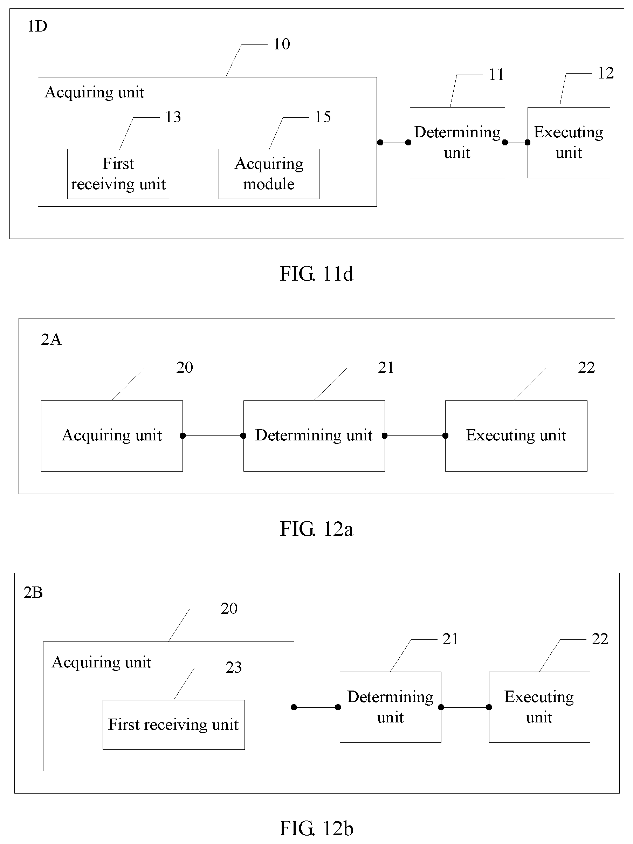

Referring to FIG. 11d in addition to FIG. 11a, FIG. 11d is a schematic diagram of another apparatus according to Embodiment 11 of the present invention. This apparatus is optimized based on the apparatus shown in FIG. 11a. As shown in FIG. 11d, in an embodiment, a service access control apparatus 1D is provided, where the acquiring unit 10 may include: an acquiring module 15, configured to acquire locally configured TFT information.

The service access control apparatus 1D in this embodiment may be a network device such as the PGW or the GGSN in the method embodiments.

It should be noted that in the apparatus provided in Embodiment 11 of the present invention, the TFT information includes: allowed access information and/or denied access information, where the allowed access information includes flow template information corresponding to the allowed access information, and the denied access information includes flow template information corresponding to the denied access information; and the flow template information is any combination of: a source IP address, a destination IP address, a source port number, a destination port number, an upper layer protocol number, and an application identifier.

The determining unit 11 is specifically configured to: determine whether information of the service data is consistent with the flow template information corresponding to the allowed access information; and if the information of the service data is consistent with the flow template information of the allowed access information, determining that the service data is within the allowed access range of the TFT information; or if the information of the service data is not consistent with the flow template information of the allowed access information, determining that the service data is beyond the allowed access range of the TFT information; and/or, determine whether the information of the service data is consistent with the flow template information of the denied access information; and if the information of the service data is consistent with the flow template information of the denied access information, determine that the service data is beyond the allowed access range of the TFT information; or if the information of the service data is not consistent with the flow template information corresponding to the denied access information, determine that the service data is within the allowed access range of the TFT information.

A service access control apparatus provided in Embodiment 11 of the present invention is configured to: acquire TFT information; and when service data access control starts, and when UE sends service data to a network or an external network sends service data to the UE, determine whether the service data to be sent is within an allowed access range of the TFT information. If the service data is within the allowed access range of the TFT information, access of the service data is allowed; or if the service data is beyond the allowed access range of the TFT information, access of the service data is denied. Therefore, when the service data access control starts, access of some service data is allowed according to an actual requirement while denied access control is performed on some service data for which access needs to be denied. According to the apparatus in this embodiment, allowed access control or denied access control can be pertinently performed on service data transmitted in a network, which effectively resolves network congestion in the network and does not affect access of normal service data.

### Embodiment 12

Referring to FIG. 12a, FIG. 12a is a schematic diagram of an apparatus according to Embodiment 12 of the present invention. As shown in FIG. 12a, a service access control apparatus 2A may include:
an acquiring unit 20, configured to acquire TFT information, where the TFT information carries indication information;
a determining unit 21, configured to: when service data access control starts, determine whether the indication information carried in the TFT information acquired by the acquiring unit 21 indicates that access of service data corresponding to the TFT information is allowed; and
an executing unit 22, configured to: when a result of the determining by the determining unit 21 is yes, allow the access of the service data; or when a result of the determining by the determining unit 21 is not, deny the access of the service data.

Referring to FIG. 12b in addition to FIG. 12a, FIG. 12b is a schematic diagram of another apparatus according to Embodiment 12 of the present invention. This apparatus is optimized based on the apparatus shown in FIG. 12a. As shown in FIG. 12b, in an embodiment, the acquiring unit 20 of the service access control apparatus 2B may include: a first receiving unit 23, configured to receive a first request message sent by a network side device, where the first request message carries the TFT information and the TFT information carries the indication information; and
the first request message includes:
an activate dedicated bearer request message, a message for requesting secondary Packet Data Protocol PDP context activation, a modify evolved packet system EPS bearer request message, a modify PDP context request message, an activate secondary PDP context accept message, and the message for requesting secondary PDP context activation that are sent by the network side device.

The service access control apparatus 2B in this embodiment may be a terminal device such as the UE in method embodiments 3 to 10 of the present invention.

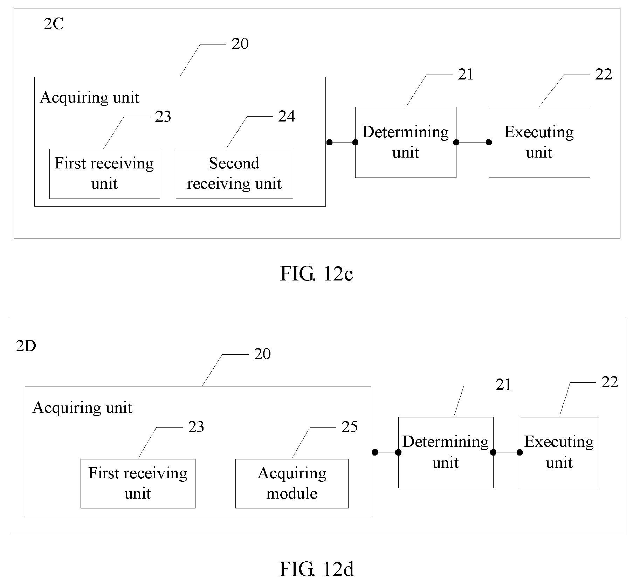

Referring to FIG. 12c in addition to FIG. 12a, FIG. 12c is a schematic diagram of another apparatus according to Embodiment 12 of the present invention. This apparatus is optimized based on the apparatus shown in FIG. 12a. As shown in FIG. 12c, in an embodiment, the acquiring unit 20 of the service access control apparatus 2C may further include: a second receiving unit 24, configured to receive a second request message, where the second request message carries the TFT information and the TFT information carries the indication information; and the second request message includes an IP-CAN session modification procedure message delivered by a PCRF.

The service access control apparatus 2C in this embodiment may be a network device such as the PGW or the GGSN in method embodiments 3 to 10 of the present invention.

Referring to FIG. 12d in addition to FIG. 12a, FIG. 12d is a schematic diagram of another apparatus according to Embodiment 12 of the present invention. This apparatus is optimized based on the apparatus shown in FIG. 12a. As shown in FIG. 12d, in an embodiment, the acquiring unit 20 of the service access control apparatus 2D may include: an acquiring module 25, configured to acquire locally configured TFT information and the TFT information carries the indication information.

The service access control apparatus 2D in this embodiment may be a network device such as the PGW or the GGSN in method embodiments 3 to 10 of the present invention.

A service access control apparatus provided in Embodiment 12 of the present invention is configured to: acquire TFT information, where the TFT information carries indication information; and when service data access control starts, and when UE sends service data to a network or an external network sends service data to the UE, determine whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the apparatus in this embodiment, allowed access control or denied access control can be pertinently performed on service data transmitted in a network, which effectively resolves network congestion in the network and does not affect access of normal service data.

### Embodiment 13

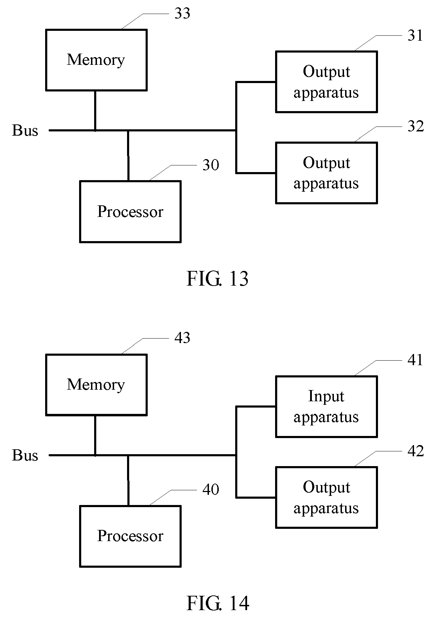

Referring to FIG. 13, FIG. 13 is a schematic diagram of an apparatus according to Embodiment 13 of the present invention. As shown in FIG. 13, a service access control apparatus may include:
at least one processor 30, an input apparatus 31, an output apparatus 32, and a memory 33. In this embodiment of the present invention, the processor 30, the input apparatus 31, the output apparatus 32, and the memory 33 may be connected by using a bus or in another manner. In FIG. 13, a connection by using a bus is used as an example.

The processor 30 performs the following steps: acquiring TFT information; when service data access control starts, determining whether service data is within an allowed access range of the TFT information; and if a result of the determining is yes, allowing access of the service data; or if a result of the determining is not, denying access of the service data.

In an embodiment of the present invention, when acquiring the TFT information, the processor 30 may specifically perform the following step: receiving an attach accept message sent by a network side device, where the attach accept message carries the TFT information.

In an embodiment of the present invention, when acquiring the TFT information, the processor 30 may specifically perform the following step: receiving TFT information delivered by a PCRF.

In an embodiment of the present invention, when acquiring the TFT information, the processor 30 may specifically perform the following step: acquiring locally configured TFT information.

In an embodiment of the present invention, the memory 33 may store the TFT information, where the TFT information includes: allowed access information and/or denied access information, where the allowed access information includes flow template information corresponding to the allowed access information, and the denied access information includes flow template information corresponding to the denied access information; and the flow template information is any combination of: a source IP address, a destination IP address, a source port number, a destination port number, an upper layer protocol number, and an application identifier.

In an embodiment of the present invention, when performing the step of when service data access control starts, determining whether service data is within an allowed access range of TFT information acquired by an acquiring unit 10, the processor 30 may specifically perform the following steps: determining whether information of the service data is consistent with the flow template information corresponding to the allowed access information; and if the information of the service data is consistent with the flow template information corresponding to the allowed access information, determining that the service data is within the allowed access range of the TFT information; or if the information of the service data is not consistent with the flow template information corresponding to the allowed access information, determining that the service data is beyond the allowed access range of the TFT information; and/or, determining whether the information of the service data is consistent with the flow template information corresponding to the denied access information; and if the information of the service data is consistent with the flow template information corresponding to the denied access information, determining that the service data is beyond the allowed access range of the TFT information; or if the information of the service data is not consistent with the flow template information corresponding to the denied access information, determining that the service data is within the allowed access range of the TFT information.

A service access control apparatus provided in Embodiment 13 of the present invention is configured to: acquire TFT information; and when service data access control starts, and when UE sends service data to a network or an external network sends service data to the UE, determine whether the service data to be sent is within an allowed access range of the TFT information. If the service data is within the allowed access range of the TFT information, access of the service data is allowed; or if the service data is beyond the allowed access range of the TFT information, access of the service data is denied. Therefore, when the service data access control starts, access of some service data is allowed according to an actual requirement while denied access control is performed on some service data for which access needs to be denied. According to the apparatus in this embodiment, allowed access control or denied access control can be pertinently performed on service data transmitted in a network, which effectively resolves network congestion in the network and does not affect access of normal service data.

### Embodiment 14

Referring to FIG. 14, FIG. 14 is a schematic diagram of an apparatus according to Embodiment 14 of the present invention. As shown in FIG. 14, a service access control apparatus may include: at least one processor 40, an input apparatus 41, an output apparatus 42, and a memory 43. In this embodiment of the present invention, the processor 40, the input apparatus 41, the output apparatus 42, and the memory 43 may be connected by using a bus or in another manner. In FIG. 14, a connection by using a bus is used as an example.

The processor 40 performs the following steps: acquiring TFT information, where the TFT information carries indication information; when service data access control starts, determining whether the indication information carried in the TFT information indicates that access of service data corresponding to the TFT information is allowed; and if a result of the determining is yes, allowing the access of the service data; or if a result of the determining is not, denying the access of the service data.

In an embodiment of the present invention, when performing the step of acquiring the TFT information, where the TFT information carries the indication information, the processor 40 may specifically perform the following step: receiving a first request message sent by a network side device, where the first request message carries the TFT information, and the TFT information carries the indication information.

The memory unit 43 stores the first request message, where the first request message includes: an activate dedicated bearer request message, a message for requesting secondary Packet Data Protocol PDP context activation, a modify evolved packet system EPS bearer request message, a modify PDP context request message, an activate secondary PDP context accept message, and the message for requesting secondary PDP context activation that are sent by the network side device.

In an embodiment of the present invention, when performing the step of acquiring the TFT information, where the TFT information carries the indication information, the processor 40 may specifically perform the following step: receiving a second request message, where the second request message carries the TFT information, and the TFT information carries the indication information.

The memory unit 43 stores the second request message, where the second request message includes an IP-CAN session modification procedure message delivered by a PCRF.

In an embodiment of the present invention, when performing the step of acquiring the TFT information, where the TFT information carries the indication information, the processor 40 may specifically perform the following step: acquiring locally configured TFT information, where the TFT information carries the indication information.

A service access control apparatus provided in Embodiment 14 of the present invention is configured to: acquire TFT information, where the TFT information carries indication information; and when service data access control starts, and when UE sends service data to a network or an external network sends service data to the UE, determine whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the apparatus in this embodiment, allowed access control or denied access control can be pertinently performed on service data transmitted in a network, which effectively resolves network congestion in the network and does not affect access of normal service data.

A service access control apparatus provided in Embodiment 14 of the present invention is configured to: acquire TFT information, where the TFT information carries indication information; and when service data access control starts, and when UE sends service data to a network or an external network sends service data to the UE, determine whether the indication information carried in the TFT information indicates that access of service data corresponding to the TFT information is allowed. If a result of the determining is yes, the access of the service data is allowed; or if a result of the determining is not, the access of the service data is denied. Therefore, when the service data access control starts, access of some service data is allowed according to an actual requirement while denied access control is performed on some service data for which access needs to be denied. According to the apparatus in this embodiment, allowed access control or denied access control can be pertinently performed on service data transmitted in a network, which effectively resolves network congestion in the network and does not affect access of normal service data.

A person of ordinary skill in the art may understand that all or some of the steps of the methods in the embodiments may be implemented by a program instructing relevant hardware. The program may be stored in a computer readable storage medium. The storage medium may include: a read-only memory, a magnetic disk, or an optical disc.

The service access control method and apparatus provided in the present invention has been described in detail in the foregoing, and an ordinary person skilled in the art can make variations to specific implementation manners and the application scope without departing from the spirit of the embodiments of the present invention. In conclusion, the content of this specification should not be understood as a limitation on the present invention.

## Claims

1. A service access control method, comprising:
acquiring traffic flow template TFT information;
when service data access control starts, determining whether service data is within an allowed access range of the TFT information; and
if a result of the determining is yes, allowing access of the service data; or if a result of the determining is not, denying access of the service data.

2. The service access control method according to claim 1, wherein the acquiring TFT information comprises:
receiving an attach accept message sent by a network side device, wherein the attach accept message carries the TFT information.

3. The service access control method according to claim 2, wherein the acquiring TFT information comprises:
receiving TFT information delivered by a policy and charging rules function PCRF.

4. The service access control method according to claim 2, wherein the acquiring TFT information comprises:
acquiring locally configured TFT information.

5. The service access control method according to any one of claims 1 to 4, wherein:
the TFT information comprises allowed access information and/or denied access information, wherein the allowed access information comprises flow template information corresponding to the allowed access information, and the denied access information comprises flow template information corresponding to the denied access information; and
the determining whether service data is within an allowed access range of the TFT information comprises:
determining whether information of the service data is consistent with the flow template information corresponding to the allowed access information; and if yes, determining that the service data is within the allowed access range of the TFT information; or if not, determining that the service data is beyond the allowed access range of the TFT information;
and/or
determining whether the information of the service data is consistent with the flow template information corresponding to the denied access information; and if yes, determining that the service data is beyond the allowed access range of the TFT information; or if not, determining that the service data is within the allowed access range of the TFT information.

6. The service access control method according to claim 5, wherein:
the flow template information is any combination of: a source IP address, a destination IP address, a source port number, a destination port number, an upper layer protocol number, and an application identifier.

7. A service access control method, comprising:
acquiring TFT information, wherein the TFT information carries indication information;
when service data access control starts, determining whether the indication information carried in the TFT information indicates that access of service data corresponding to the TFT information is allowed; and
if a result of the determining is yes, allowing the access of the service data; or if a result of the determining is not, denying the access of the service data.

8. The service access control method according to claim 7, wherein:
the TFT information is any combination of: a source IP address, a destination IP address, a source port number, a destination port number, an upper layer protocol number, and an application identifier.

9. The service access control method according to claim 7 or 8, wherein:
the acquiring TFT information comprises:
receiving a first request message sent by a network side device, wherein the first request message carries the TFT information, and the TFT information carries the indication information; and
the first request message comprises:
an activate dedicated bearer request message, a message for requesting secondary Packet Data Protocol PDP context activation, a modify evolved packet system EPS bearer request message, a modify PDP context request message, an activate secondary PDP context accept message, and the message for requesting secondary PDP context activation that are sent by the network side device.

10. The service access control method according to claim 9, wherein the acquiring TFT information comprises: receiving a second request message, wherein the second request message carries the TFT information and the second request message comprises:
an IP-CAN session modification procedure message delivered by a policy and charging rules function PCRF.

11. The service access control method according to claim 9, wherein the acquiring TFT information comprises:
acquiring locally configured TFT information.

12. A service access control apparatus, comprising:
an acquiring unit, configured to acquire TFT information;
a determining unit, configured to: when service data access control starts, determine whether service data is within an allowed access range of the TFT information acquired by the acquiring unit; and
an executing unit, configured to: when a result of the determining by the determining unit is yes, allow access of the service data; or when a result of the determining by the determining unit is not, deny access of the service data.

13. The service access control apparatus according to claim 12, wherein the acquiring unit comprises a first receiving unit, configured to receive an attach accept message sent by a network side device, wherein the attach accept message carries the TFT information.

14. The service access control apparatus according to claim 13, wherein the acquiring unit comprises a second receiving unit, configured to receive TFT information delivered by a PCRF.

15. The service access control apparatus according to claim 13, wherein the acquiring unit comprises an acquiring module, configured to acquire locally configured TFT information.

16. The service access control apparatus according to any one of claims 12 to 15, wherein the TFT information comprises allowed access information and/or denied access information, wherein the allowed access information and the denied access information each comprise corresponding flow template information; and
the determining unit is specifically configured to: determine whether information of the service data is consistent with the flow template information of the allowed access information; and if the information of the service data is consistent with the flow template information of the allowed access information, determine that the service data is within the allowed access range of the TFT information; or if the information of the service data is not consistent with the flow template information of the allowed access information, determine that the service data is beyond the allowed access range of the TFT information;
and/or
determine whether the information of the service data is consistent with the flow template information of the denied access information; and if the information of the service data is consistent with the flow template information of the denied access information, determine that the service data is beyond the allowed access range of the TFT information; or if the information of the service data is not consistent with the flow template information of the denied access information, determine that the service data is within the allowed access range of the TFT information.

17. The service access control apparatus according to claim 16, wherein the flow template information is any combination of: a source IP address, a destination IP address, a source port number, a destination port number, an upper layer protocol number, and an application identifier.

18. A service access control apparatus, comprising:
an acquiring unit, configured to acquire TFT information, wherein the TFT information carries indication information;
a determining unit, configured to: when service data access control starts, determine whether the indication information carried in the TFT information acquired by the acquiring unit indicates that access of service data corresponding to the TFT information is allowed; and
an executing unit, configured to: when a result of the determining by the determining unit is yes, allow the access of the service data; or when a result of the determining by the determining unit is not, deny the access of the service data.

19. The service access control apparatus according to claim 18, wherein the acquiring unit comprises a first receiving unit, configured to receive a first request message sent by a network side device, wherein the first request message carries the TFT information and the TFT information carries the indication information; and
the first request message comprises:
an activate dedicated bearer request message, a message for requesting secondary Packet Data Protocol PDP context activation, a modify evolved packet system EPS bearer request message, a modify PDP context request message, an activate secondary PDP context accept message, and the message for requesting secondary PDP context activation that are sent by the network side device.

20. The service access control apparatus according to claim 18 or 19, wherein the acquiring unit comprises a second receiving unit, configured to receive a second request message, wherein the second request message carries the TFT information and the TFT information carries the indication information; and
the second request message comprises an IP-CAN session modification procedure message delivered by a PCRF.

21. The service access control apparatus according to claim 18 or 19, wherein the acquiring unit comprises an acquiring module, configured to acquire locally configured TFT information and the TFT information carries the indication information.
